(19) Europäisches Patentamt
European Patent Office
Office européen des brevets

(11) EP 4 723 786 A1

(12) **EUROPEAN PATENT APPLICATION**
published in accordance with Art. 153(4) EPC

(43) Date of publication:
08.04.2026 Bulletin 2026/15

(51) International Patent Classification (IPC):
*H04W 72/542* (2023.01)

(21) Application number: 24818338.6

(22) Date of filing: 22.03.2024

(52) Cooperative Patent Classification (CPC):
H04B 7/185; H04W 72/044; H04W 72/0446;
H04W 72/542; H04W 74/0833

(86) International application number:
PCT/CN2024/083364

(87) International publication number:
WO 2024/250801 (12.12.2024 Gazette 2024/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 09.06.2023 CN 202310688401

(71) Applicant: ZTE Corporation
Shenzhen, Guangdong 518057 (CN)

(72) Inventors:
• GAO, Minggang
  Shenzhen, Guangdong 518057 (CN)
• DING, Xuemei
  Shenzhen, Guangdong 518057 (CN)
• WEI, Mingye
  Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **ACCESS METHOD AND APPARATUS, DEVICE, AND COMPUTER-READABLE STORAGE MEDIUM**

(57) Provided are an access method and apparatus, a device, and a computer-readable storage medium. The access method comprises: according to a first signal quality, determining a target access resource from a mapping relationship, the first signal quality being obtained by a first node measuring a signal of a second node, and the mapping relationship comprising a correspondence between a plurality of signal qualities and a plurality of access resources; and sending an access request to the second node by means of the target access resource, the access request being used for requesting to access the second node.

| A first node, according to a first signal quality, determines a target access resource from a mapping relationship | S401 |
| --- | --- |

| The first node sends an access request to a second node by means of the target access resource | S402 |
| --- | --- |

FIG. 4

**Description**

The present disclosure claims a priority to Chinese Patent Application No. 202310688401. X, filed on June 09, 2023, the entire content of which is incorporated into the present application by reference.

TECHNICAL FIELD

The present disclosure relates to the field of communication technologies, and in particular, to an access method and apparatus, a device and a computer readable storage medium.

BACKGROUND

With the evolution of the 5th generation mobile communication technology (5G) and the development trend of the future 6th generation mobile communication technology (6G), 5G Advanced has begun to adopt satellite links as a non-terrestrial network (NTN), which serves as a most crucial technology for the next-generation communication. The space-terrestrial integrated communication system of the future 6G will be a significant evolution of current network coverage.

SUMMARY

In an aspect, an access method is provided. The access method includes: determining a target access resource from a mapping relationship according to first signal quality, where the first signal quality is obtained by the first node measuring a signal of a second node, and the mapping relationship includes a corresponding relationship between multiple signal quality and multiple access resources; and sending an access request to the second node through the target access resource, where the access request is used to request to access the second node.

In another aspect, an access method is provided. The access method includes: receiving an access request of a first node and determining a corresponding target access resource; determining second signal quality from a mapping relationship according to the target access resource, where the mapping relationship includes a corresponding relationship between multiple signal quality and multiple access resources; and performing resource scheduling on the first node according to the second signal quality.

In yet another aspect, an access apparatus is provided. The access apparatus includes a determining module and a sending module; the determining module is configured to, determine a target access resource from a mapping relationship according to first signal quality, where the first signal quality is obtained by the first node measuring a signal of a second node, and the mapping relationship includes a corresponding relationship between multiple signal quality and multiple access resources; and the sending module is configured to send an access request to the second node through the target access resource, where the access request is used to request to access the second node.

In yet another aspect, an access apparatus is provided. The access apparatus includes: a receiving module, a determining module, and a scheduling module; the receiving module is configured to, receive an access request of a first node and determine a corresponding target access resource; the determining module is configured to, determine second signal quality from a mapping relationship according to the target access resource, where the mapping relationship includes a corresponding relationship between multiple signal quality and multiple access resources; and the scheduling module is configured to perform resource scheduling on the first node according to the second signal quality.

In yet another aspect, an electronic device is provided. The electronic device includes: a memory and a processor; where the memory and the processor are coupled with each other; the memory is configured to store a computer program; the processor, when executing the computer program, implements the access method described in any one of the above aspects.

In yet another aspect, a computer readable storage medium is provided. The computer readable storage medium has stored computer program instructions thereon, and the computer program instructions, when executed by a processor, implement the access method described in any one of the above aspects.

In yet another aspect, a computer program product is provided. The computer program product includes computer program instructions, and the computer program instructions, when executed by a processor, implement the access method described in any one of the above aspects.

BRIEF DESCRIPTION OF THE DRAWINGS

In order to illustrate technical solutions in the present disclosure more clearly, the drawings to be used in some embodiments of the present disclosure will be introduced briefly. Obviously, the drawings to be described below are merely drawings of some embodiments of the present disclosure, and those ordinary skilled in the art may also obtain other drawings according to these drawings.

FIG. 1 is a schematic diagram of an architecture of a space-terrestrial integrated future communication according to some embodiments.

FIG. 2 is a schematic diagram of a link comparison according to some embodiments.

FIG. 3 is a structural schematic diagram of a communication system according to some embodiments.

FIG. 4 is a schematic flowchart of an access method according to some embodiments.

FIG. 5 is a schematic flowchart of another access method according to some embodiments.

FIG. 6 is a schematic diagram of an interaction of an access method according to some embodiments.

FIG. 7 is a schematic diagram of a composition of an access apparatus according to some embodiments.

FIG. 8 is a schematic diagram of another composition of an access apparatus according to some embodiments.

FIG. 9 is a schematic diagram of a composition of an electronic device according to some embodiments.

DETAILED DESCRIPTION

In order to enable those skilled in the art to better understand technical solutions of the embodiments of the present disclosure, the technical solutions in the present disclosure will be described below clearly and completely with reference to the drawings. Obviously, the described embodiments are merely some but not all of the embodiments of the present disclosure. All other embodiments obtained based on the embodiments of the present disclosure by the ordinary skilled in the art without paying any creative effort, shall be included in the protection scope of the present disclosure.

It should be noted that in the present disclosure, the words such as "exemplary/exemplarily" or "for example (e.g.)", etc., are used to present an example, illustration, or explanation. Any embodiment or design scheme described with "exemplary/exemplarily" or "for example (e.g.)" in the present disclosure should not be construed as preferred or advantageous over other embodiments or design schemes. Rather, the usage of words such as "exemplarily" or "for example", etc., is intended to present relevant concepts in a specific manner.

Hereinafter, the terms "first", "second", etc., are used for descriptive purposes only, but are not to be construed as indicating or implying relative importance or implicitly indicating a number of indicated technical features. Thus, features defined with "first" or "second", etc., may explicitly or implicitly include one or more such features.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more.

The space-terrestrial integrated communication system of the future 6G will be a significant evolution of current network coverage. This is because existing terrestrial mobile communication technology may only cover less than 40% of the global land area, and it is impossible to achieve network coverage in the ocean areas that account for the vast majority of the global areas of the land area by building terrestrial base stations. Therefore, for future mobile communication technologies to expand their coverage, adopting aerial technologies, that is satellite technologies (including low-orbit satellites and medium-orbit satellites), is an extremely important measure to achieve network coverage.

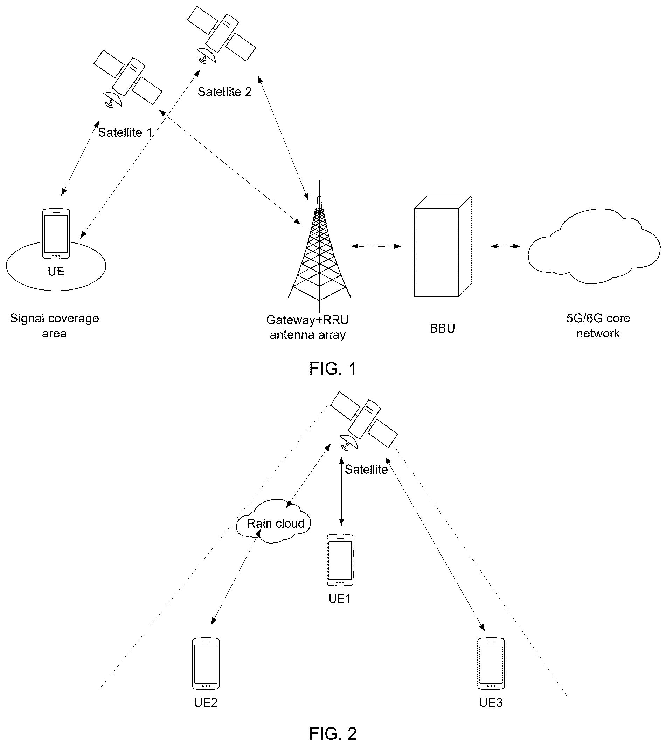

FIG. 1 is a schematic diagram of an architecture of a space-terrestrial integrated future communication according to some embodiments. As shown in FIG. 1, the terrestrial communication system mainly transmits communication signals to various satellites through an antenna array and these communication signals generally use the C/Ku/Ka bands. The terrestrial communication system may include a 5G/6G core network, a building base band unit (BBU), a gateway, and a remote radio unit (RRU) antenna array. Various satellites use the L/S band to forward communication signals to the user equipment (UE) in the target area and UEs that support the L/S band may then acquire mobile signal coverage.

Unlike traditional terrestrial base stations built at fixed locations, satellites are mobile. In addition, satellites are much higher than traditional terrestrial base stations. That is, the distance between a satellite and a UE is usually far greater than that between a traditional terrestrial base station and a UE. Therefore, the uplink distance is very long, and the uplink distance varies even more due to the movement of satellites, making it difficult to maintain uplink synchronization. Even if the UE remains stationary, the distance between the satellite and the UE will change. When combined with UE movement, the challenge of achieving entire uplink synchronization becomes even greater.

To ensure synchronization, the UE needs to perform random access to establish a communication connection with the network side (e.g., satellite/base station). Among the signaling overhead, the signaling overhead during UE access (e.g., power-on registration or transitioning from an idle state to a connected state) is the largest, and once a failure occurs, a retry is required, which may easily lead to signaling storms. For traditional terrestrial base stations, the impact of retrying is basically negligible due to their large frequency bandwidth (e.g., 100MHz). However, satellites have a very small frequency domain bandwidth, usually only about 10MHz. Therefore, frequency-domain resources of satellites are very precious, and this retry process will greatly waste the frequency-domain resources of satellites. In addition, if multiple UEs fail to access simultaneously at the same time, signaling conflicts may occur due to mutual congestion, which will lead to a lower success rate for subsequent retries.

The reason for the retry is that, in current related technologies, when the UE sends an access message (e.g.,

PRACH (physical random access channel)) to request access, the network side cannot acquire the current signal quality of the UE. According to the current technologies of 3rd generation partnership project (3GPP) and the industry, the resources for random access are basically selected randomly by the UE, and the corresponding resource scheduling on the network side is also completely random or according to certain experience. This can lead to a mismatch or even conflict between the resource scheduling manners of the network side and the signal quality of the UE, resulting in the failure of the access process. The above process has little impact on traditional terrestrial base stations because the coverage area of a single cell of a terrestrial base station is very limited, and the signal quality of the UE does not change significantly. Moreover, the terrestrial base stations are relatively dense, and UEs with poor signal quality switch to base station cells with better signal quality, which may ensure the signal quality of UEs in the serving cell. Moreover, terrestrial base stations have a large frequency domain bandwidth, so even if the UE fails retries repeatedly after access failures, terrestrial base stations have enough frequency domain resources to support the additional resource overhead of such retry. Satellites have a large coverage area, and the distance between UEs within the coverage area is relatively far and scattered. Furthermore, the link conditions (the communication distance and the weather, etc.) corresponding to different UEs are different. As shown in FIG. 2, the signal quality of UE1, which is closer to the satellite and under good weather conditions, is better than that of UE2, which is far from the satellite and under poor weather conditions. For UE2 and UE3 at the same distance, UE3 has better signal quality than UE2 because UE3 is in clear weather.

In summary, due to the scarcity of frequency domain resources of satellites, UEs need to apply relevant information of the signal quality to the initial access process so that satellites may predict the signal quality of the UE, thereby facilitating subsequent resource scheduling according to signal quality, improving the success rate of UE access, and reducing retry processes.

Based on this, the embodiments of the present disclosure provide an access method in which a first node and a second node store a same mapping relationship. The first node, when initiating a request for access, may determine a target access resource to be used for access from the mapping relationship according to a current signal quality. Then, the second node may determine signal quality of the first node from the mapping relationship according to the target access resource corresponding to a received request, and then perform resource scheduling on the first node according to the signal quality, which ensures that the scheduling method matches the signal quality, avoids a retry process of random access, and reduces the overhead of transmission resources.

A network architecture of the communication system (including but not limited to a satellite communication system, and a communication system that integrates 3G, 4G, 5G, 6G and satellite communication) in the embodiments of the present disclosure may include a first node and a second node. In some examples, the first node may be a satellite, and the second node may be a terminal/user equipment. In another examples, the first node may be a user equipment and the second node may be a satellite. In yet another examples, in a user equipment-to-user equipment communication scenario, both the first node and the second node may be user equipment, which is not limited to the embodiments of the present disclosure.

Taking an example in which the first node is the UE and the second node is the satellite for explanation below.

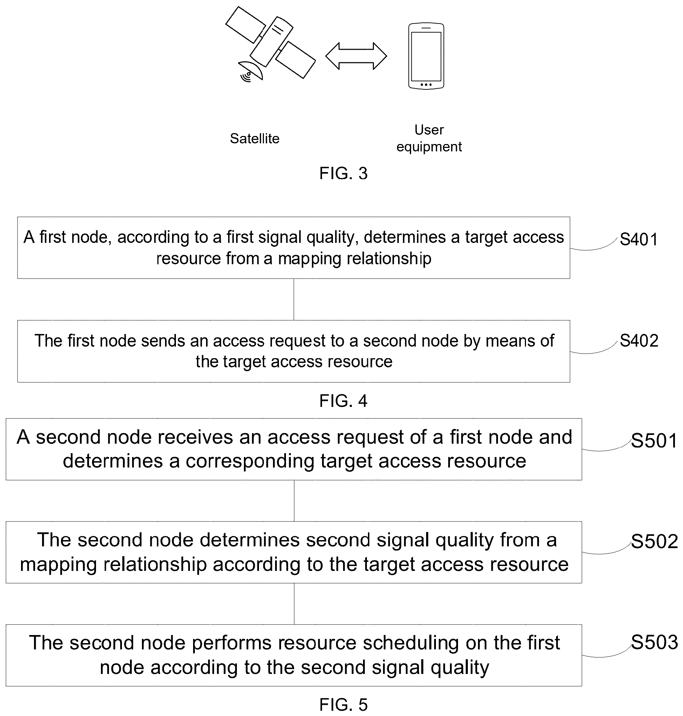

FIG. 3 is a structural schematic diagram of a communication system, provided by the embodiments of the present disclosure. As shown in FIG. 3, the communication system includes a satellite and a UE. The satellite and the UE may connect through radio network. The radio network may be supported by routers, switches, or other devices that facilitate communication between the satellite and the UE, which is not limited to the embodiments of the present disclosure.

In some embodiments, the satellite may also be referred to as a satellite node, a communication satellite, etc. The satellite may be a geostationary earth orbit (GEO) satellite or a non-geostationary earth orbit (NGEO) satellite. It may also be a high-orbit satellite, a medium-orbit satellite, or a low-orbit satellite. There is a radio link between the satellite and the UE.

In some embodiments, the satellite is used to provide radio access services to the UE. Specifically, a satellite provides one or more service coverage areas (also referred to as cells). A UE entering the area may communicate with the satellite by a wireless signal, to receive a radio access service provided by the satellite.

In some embodiments, UE may be a device with a wireless transceiver function, for example, a mobile phone, a tablet computer, a wearable device, a vehicle-mounted device, an augmented reality (AR)/virtual reality (VR) device, a notebook computer, an ultra-mobile personal computer (UMPC), a netbook, and a personal digital assistant (PDA), etc. The embodiments of the present disclosure do not limit the specific types of user equipments.

It should be understood that, FIG. 3 is an exemplary structural diagram, and a number of devices included in the communication system shown in FIG. 3 is not limited thereto, and for example, the number of satellites and the number of UEs are not limited thereto. Furthermore, in addition to the devices shown in FIG. 3, the communication system shown in FIG. 3 may also include other devices, which is not limited thereto.

FIG. 4 is a schematic flowchart of an access method provided by the embodiments of the present disclosure. For example, the access method provided in the present disclosure may be applied to the communication system shown in FIG. 3, specifically may be applied to the first node, that is the user equipment in FIG. 3.

As shown in FIG. 4, the access method provided in the present disclosure may include S401 to S402 as follows.

In S401, a first node determines a target access resource from a mapping relationship according to first signal quality.

The first signal quality is obtained by the first node measuring a signal of a second node. The mapping relationship includes a corresponding relationship between multiple signal quality and multiple access resources.

In some embodiments, the first node may measure the signal of the second node, to obtain first signal quality. The present disclosure does not limit a timing of the measurement, which may be periodic measurement or measurement performed before access is required. Furthermore, the present disclosure does not limit the form of signal quality. Exemplarily, the signal quality may be reference signal receiving power (RSRP), may also be signal to noise ratio (SNR), or may also be other parameters used to represent the level of signal quality and take an example in which the signal quality is the SNR for explanation in the embodiments of the present disclosure.

Furthermore, the first node stores the mapping relationship that includes a corresponding relationship between multiple signal quality and multiple access resources and the first node may determine an access resource used in an access process from the mapping relationship according to the measured second signal quality.

In some embodiments, the above S401 may be implemented as S4011 to S4012.

In S4011, the first node determines second signal quality from the mapping relationship according to the first signal quality. The second signal quality has a smallest difference with the first signal quality compared to those with other signal quality in the mapping relationship.

In S4012, the first node determines an access resource corresponding to the second signal quality in the mapping relationship, as the target access resource.

It can be understood that, in the current access process, the first node is unable to report its own signal quality to the second node. Therefore, by establishing the correspondence between the access resource and the signal quality used in the access process, the second node is enabled to estimate the signal quality of the first node according to the access resource during the access process in the embodiments of the present disclosure, thus overcoming the shortcomings of the prior art.

In some embodiments, the signal quality in the above mapping relationship is determined according to a numbering of the access resource and multiple preset parameters. The process for determining the mapping relationship refers to the description in the following example, which will not be repeated in detail herein.

It should be understood that, in order to ensure that the mapping relationship between the first node and the second node is synchronized, the first node and the second node adopt an identical mapping relationship and the second node may inform the first node of relevant parameters for constructing the mapping relationship. Therefore, in some embodiments, the access method provided in the embodiments of the present disclosure further includes S400 as follows, and S400 may be performed before the above S401.

In S400, the first node receives a configuration instruction issued from the second node. The configuration instruction is used to indicate the first node to construct the mapping relationship. The configuration instruction includes the multiple preset parameters. In response to the configuration instruction, the first node constructs the above mapping relationship.

In some embodiments, for the access method provided in the embodiments of the present disclosure, manners of determining the access resource include but are not limited to: a time domain-based, a code domain-based, and the time domain plus the code domain-based. That is, the access resource may be: a slot (slotIndex), a preamble index (also referred to as a random access PreambleIndex), a slot and preamble index.

In S402, the first node sends an access request to the second node based on the target access resource.

The access request is used to request to access the second node.

In some embodiments, the first node, after determining the target access resource, may send the access request to the second node through the determined target access resource to request to access the second node, to establish a communication connection.

For example, when the access resource is a slot, the first node may send the access request at an occasion corresponding to the determined slot. When the access resource is a preamble index, the first node may send the access request carrying the preamble index. When the access resource is the slot and the preamble index, the first node may send the access request carrying the preamble index at an occasion corresponding to the slot.

FIG. 5 is a schematic flowchart of an access method provided by the embodiments of the present disclosure. For example, the access method provided in the present disclosure may be applied to the communication system shown in FIG. 3, specifically may be applied to the second node, that is the satellite in FIG. 3.

As shown in FIG. 5, the access method provided in the present disclosure may include S501 to S503 as follows.

In S501, a second node receives an access request of a first node and determines a corresponding target access resource.

In some embodiments, the second node may receive an access request sent from the first node for requesting access, and determine the corresponding target access resource according to the access request.

Exemplarily, when the access resource is a slot, the second node may determine a corresponding slot according to an occasion of receiving the access request. When the access resource is a preamble index, the second node may detect the access request, to detect and determine a corresponding preamble index. When the access resource is a slot and a preamble index, the second node may determine a corresponding access resource according to the occasion of receiving the access request and the preamble index detected in the access request.

In S502, the second node determines second signal quality from a mapping relationship according to the target access resource.

The mapping relationship includes a corresponding relationship between multiple signal quality and multiple access resources.

In some embodiments, the second node stores the mapping relationship that is identical to the mapping relationship stored in the first node. The second node, after determining the access resource, may determine the second signal quality corresponding to the access resource from the mapping relationship. A difference between the second signal quality and an actual first signal quality of the first node is less than a preset threshold, so it may be used to represent the current signal quality of the first node.

In S503, the second node performs resource scheduling on the first node according to the second signal quality.

In some embodiments, the second node, after determining the signal quality of the first node, may select a suitable resource scheduling strategy according to the second signal quality, and perform resource scheduling on the first node according to the resource scheduling strategy.

The embodiments of the present disclosure do not limit the selection manner of the resource scheduling strategy. As an example, for the first node with poor signal quality (e.g., the signal quality is less than a preset value), it may be allowed to use more resources to improve reliability, such as lowering a modulation and coding scheme (MCS) and allocating more resource blocks (RBs). For the first node with a better signal (e.g., the signal quality is greater than or equal to a preset value), it may be allowed to occupy fewer resources, such as by increasing the MCS and allocating fewer RBs. This may still achieve reliable signal transmission, thereby optimizing and balancing resource utilization.

In some embodiments, the access method provided in the embodiments of the present disclosure further includes S504 as follows.

In S504, the second node delivers a configuration instruction to the first node.

The configuration instruction is used to indicate the first node to construct the mapping relationship; and the configuration instruction include multiple preset parameters.

Exemplarily, the second node may determine a type of access resource to be selected according to requirements of served users. For example, if the served users do not have high latency requirements, the mapping relationship may be determined based on the time domain (i.e., the access resource is the slot). If the served users have high latency requirements, the mapping relationship may be determined based on the code domain (i.e., the access resource is the preamble index). If the served users have certain latency requirements, the mapping relationship may be determined based on the time domain and the code domain (i.e., the access resource is the slot and preamble indexe).

As an example, the configuration instruction may include fields of "SNRPrachType" and "SNRPrachConfig". The field "SNRPrachType" may be used to indicate a type of access resource, and the field "SNRPrachConfig" is used to indicate the above multiple preset parameters. When a value corresponding to the field "SNRPrachType" is TimeBased, it represents that the first node is indicated to create a mapping relationship when the access resource is the slot. When a value corresponding to the field "SNRPrachType" is CodeBased, it represents that the first node is indicated to create a mapping relationship when the access resource is the preamble index. When a value corresponding to the field "SNRPrachType" is TimeAndCodeBased, it represents that the first node is indicated to create a mapping relationship when the access resource is the slot and the preamble index.

Combined with some examples, the construction process of the above mapping relationship is described in detail, including three cases as follows.

Case 1

In a case where the access resource is the slot, the multiple preset parameters include: a and b. a and b are real numbers, where a is used to represent a slope of a relationship between the signal quality and the slot, and b is used to represent an intercept of the relationship between the signal quality and the slot.

The signal quality in the above mapping relationship is determined according to the change of the access resource and the multiple preset parameters, and satisfies an expression as follows:

$$SQ = Rn1 \cdot a + b \qquad \qquad \text{Formula (1)}$$

Herein, SQ is the signal quality and Rn1 is a numbering of the slot.

It can be understood that, the above preset parameters a and b may be determined based on practical experience. As an example, when the signal quality is less than 0, it may be considered that the signal quality is too poor to achieve access. Therefore, it may be determined that an initial value of the signal quality in the mapping relationship is a value close to 0dB, for example, 0.5dB may be selected as the initial value. Considering the existence of various interferences in the current network, the signal quality is basically around 20-30 dB under ideal conditions. Therefore, a value may be determined within the range of 20-30dB as a termination value of the signal quality in the mapping relationship. Furthermore, the multiple preset parameters, that is the values of a and b, may be determined according to the initial value and termination value of the slot range and the signal quality.

The second node, after determining the multiple preset parameters, may send a configuration instruction including the following contents to the first node:

```
SNRPrachConfig={
a = 2;
b=0.5;
}.
```

Taking the example in which each radio frame in wireless communication technology has 10 slots, the mapping relationship calculated by the first node and the second node according to the above preset parameters a and b and Formula (1) is shown in Table 1 below.

Table 1

| Numbering of slots | Signal quality (dB) |
|---|---|
| 0 | 0.5 |
| 1 | 2.5 |
| 2 | 4.5 |
| 3 | 6.5 |
| 4 | 8.5 |
| 5 | 10.5 |
| 6 | 12.5 |
| **7** | **14.5** |
| 8 | 16.5 |
| 9 | 18.5 |

Taking an example in which the first signal quality measured by the first node is 14.3dB, it may be seen from Table 1 that the second signal quality with a smallest difference from the first signal quality (if there are multiple second signal quality, it means that multiple second signal quality may be used) in Table 1 is 14.5, and the numbering of the slot corresponding to the second signal quality is 7. Therefore, the first node may send the access request at the occasion corresponding to slot 7. The second node, when receiving the access request at the occasion corresponding to the slot 7, and performing searching according to Table 1, to obtain the corresponding second signal quality of 14.5 dB, may use the 14.5 dB as the estimated signal quality of the first node, determine a resource scheduling strategy according to the value of 14.5 dB, and perform resource scheduling on the first node.

Case 2

In a case where the access resource is the preamble index, the multiple preset parameters include: a and b. a and b are real numbers, where a is used to represent a slope of a relationship between the signal quality and the preamble index, and b is used to represent an intercept of the relationship between the signal quality and the preamble index.

The signal quality in the above mapping relationship is determined according to the change of the access resource and the multiple preset parameters, and satisfies an expression as follows:

$$SQ = Rn2 \cdot a + b \qquad\qquad \text{Formula (2)}$$

Herein, SQ is the signal quality and Rn2 is a numbering of the preamble index.

It should be understood that, for the determination of the above preset parameters a and b, reference may be made to the relevant descriptions of Case 1 above, which will not be repeated herein.

The second node, after determining the multiple preset parameters, may send a configuration instruction including the following contents to the first node:

```
SNRPrachConfig={
a = 0.5;
b=0.5;
}.
```

Taking an example in which there are 64 preamble indices in the existing standard of wireless communication technology, the mapping relationship calculated by the first node and the second node according to the above preset parameters a and b and Formula (2) is shown in Table 2 below.

Table 2

| Numbering of the preamble index | Signal quality (dB) |
| --- | --- |
| 0 | 0.5 |
| 1 | 1 |
| 2 | 1.5 |
| 3 | 2 |
| 4 | 2.5 |
| 5 | 3 |
| 6 | 3.5 |
| 7 | 4 |
| 8 | 4.5 |
| 9 | 5 |
| 10 | 5.5 |
| 11 | 6 |
| 12 | 6.5 |
| 13 | 7 |
| 14 | 7.5 |
| 15 | 8 |
| 16 | 8.5 |
| 17 | 9 |
| 18 | 9.5 |
| 19 | 10 |
| 20 | 10.5 |
| 21 | 11 |
| 22 | 11.5 |
| 23 | 12 |
| 24 | 12.5 |
| 25 | 13 |
| 26 | 13.5 |
| 27 | 14 |
| **28** | **14.5** |
| 29 | 15 |
| 30 | 15.5 |

(continued)

| Numbering of the preamble index | Signal quality (dB) |
|---|---|
| 31 | 16 |
| 32 | 16.5 |
| 33 | 17 |
| 34 | 17.5 |
| 35 | 18 |
| 36 | 18.5 |
| 37 | 19 |
| 38 | 19.5 |
| 39 | 20 |
| 40 | 20.5 |
| 41 | 21 |
| 42 | 21.5 |
| 43 | 22 |
| 44 | 22.5 |
| 45 | 23 |
| 46 | 23.5 |
| 47 | 24 |
| 48 | 24.5 |
| 49 | 25 |
| 50 | 25.5 |
| 51 | 26 |
| 52 | 26.5 |
| 53 | 27 |
| 54 | 27.5 |
| 55 | 28 |
| 56 | 28.5 |
| 57 | 29 |
| 58 | 29.5 |
| 59 | 30 |
| 60 | 30.5 |
| 61 | 31 |
| 62 | 31.5 |
| 63 | 32 |

Taking an example in which the first signal quality measured by the first node is 14.3dB, it may be seen from Table 2 that the second signal quality with a smallest difference from the first signal quality (if there are multiple second signal quality, it means that multiple second signal quality may be used) in Table 2 is 14.5, and the numbering of the preamble index corresponding to the second signal quality is 28. Therefore, the first node may send the access request based on the preamble index 28. The second node, when receiving the access request, and performing searching on Table 2 according to the preamble index 28, to obtain the corresponding second signal quality of 14.5 dB, may use the 14.5 dB as the estimated signal quality of the first node, determine a resource scheduling strategy according to the value of 14.5 dB, and perform resource scheduling on the first node.

Case 3

In a case where the access resource is the slot and the preamble index, the multiple preset parameters include: a, b, c, and d. a, b, c, and d are real numbers, where a is used to represent a slope of a relationship between the signal quality and the slot, b is used to represent an intercept of the relationship between the signal quality and the slot, c is used to represent a slope of a relationship between the signal quality and the preamble index, and d is used to represent an intercept of the relationship between the signal quality and the preamble index.

The signal quality in the above mapping relationship is determined according to the change of the access resource and the multiple preset parameters, and satisfies an expression as follows:

$$SQ = Rn1 \cdot a+b+Rn2 \cdot c+d \qquad\qquad \text{Formula (3)}$$

Herein, SQ is signal quality, Rn1 is a numbering of a slot, and Rn2 is a numbering of a preamble index.

It should be understood that, for the determination of the above preset parameters a, b, c and d, reference may be made to the relevant descriptions of Case 1 above, which will not be repeated herein.

The second node, after determining the multiple preset parameters, may send a configuration instruction including the following contents to the first node:

```
SNRPrachConfig={
a = 0.5;
b = 0.25;
c = 0.3;
d = 0.25;
}.
```

Taking an example in which there are 10 slots and 64 preamble indices in the existing standard of wireless communication technology, the mapping relationship calculated by the first node and the second node according to the above preset parameters a, b, c and d and Formula (3) is shown in Table 3 below.

Table 3

| Slot / Preamble index | 0 | 1 | 2 | 3 | 4 | 5 | 6 | 7 | 8 | 9 |
|---|---|---|---|---|---|---|---|---|---|---|
| 0 | 0.5 | 1 | 1.5 | 2 | 2.5 | 3 | 3.5 | 4 | 4.5 | 5 |
| 1 | 0.8 | 1.3 | 1.8 | 2.3 | 2.8 | 3.3 | 3.8 | 4.3 | 4.8 | 5.3 |
| 2 | 1.1 | 1.6 | 2.1 | 2.6 | 3.1 | 3.6 | 4.1 | 4.6 | 5.1 | 5.6 |
| 3 | 1.4 | 1.9 | 2.4 | 2.9 | 3.4 | 3.9 | 4.4 | 4.9 | 5.4 | 5.9 |
| 4 | 1.7 | 2.2 | 2.7 | 3.2 | 3.7 | 4.2 | 4.7 | 5.2 | 5.7 | 6.2 |
| 5 | 2 | 2.5 | 3 | 3.5 | 4 | 4.5 | 5 | 5.5 | 6 | 6.5 |
| 6 | 2.3 | 2.8 | 3.3 | 3.8 | 4.3 | 4.8 | 5.3 | 5.8 | 6.3 | 6.8 |
| 7 | 2.6 | 3.1 | 3.6 | 4.1 | 4.6 | 5.1 | 5.6 | 6.1 | 6.6 | 7.1 |
| 8 | 2.9 | 3.4 | 3.9 | 4.4 | 4.9 | 5.4 | 5.9 | 6.4 | 6.9 | 7.4 |
| 9 | 3.2 | 3.7 | 4.2 | 4.7 | 5.2 | 5.7 | 6.2 | 6.7 | 7.2 | 7.7 |
| 10 | 3.5 | 4 | 4.5 | 5 | 5.5 | 6 | 6.5 | 7 | 7.5 | 8 |
| 11 | 3.8 | 4.3 | 4.8 | 5.3 | 5.8 | 6.3 | 6.8 | 7.3 | 7.8 | 8.3 |
| 12 | 4.1 | 4.6 | 5.1 | 5.6 | 6.1 | 6.6 | 7.1 | 7.6 | 8.1 | 8.6 |
| 13 | 4.4 | 4.9 | 5.4 | 5.9 | 6.4 | 6.9 | 7.4 | 7.9 | 8.4 | 8.9 |
| 14 | 4.7 | 5.2 | 5.7 | 6.2 | 6.7 | 7.2 | 7.7 | 8.2 | 8.7 | 9.2 |
| 15 | 5 | 5.5 | 6 | 6.5 | 7 | 7.5 | 8 | 8.5 | 9 | 9.5 |
| 16 | 5.3 | 5.8 | 6.3 | 6.8 | 7.3 | 7.8 | 8.3 | 8.8 | 9.3 | 9.8 |
| 17 | 5.6 | 6.1 | 6.6 | 7.1 | 7.6 | 8.1 | 8.6 | 9.1 | 9.6 | 10.1 |
| 18 | 5.9 | 6.4 | 6.9 | 7.4 | 7.9 | 8.4 | 8.9 | 9.4 | 9.9 | 10.4 |
| 19 | 6.2 | 6.7 | 7.2 | 7.7 | 8.2 | 8.7 | 9.2 | 9.7 | 10.2 | 10.7 |
| 20 | 6.5 | 7 | 7.5 | 8 | 8.5 | 9 | 9.5 | 10 | 10.5 | 11 |
| 21 | 6.8 | 7.3 | 7.8 | 8.3 | 8.8 | 9.3 | 9.8 | 10.3 | 10.8 | 11.3 |
| 22 | 7.1 | 7.6 | 8.1 | 8.6 | 9.1 | 9.6 | 10.1 | **10.6** | 11.1 | 11.6 |
| 23 | 7.4 | 7.9 | 8.4 | 8.9 | 9.4 | 9.9 | 10.4 | 10.9 | 11.4 | 11.9 |

| 24 | 7.7 | 8.2 | 8.7 | 9.2 | 9.7 | 10.2 | 10.7 | 11.2 | 11.7 | 12.2 |
|----|-----|-----|-----|-----|-----|------|------|------|------|------|
| 25 | 8 | 8.5 | 9 | 9.5 | 10 | 10.5 | 11 | 11.5 | 12 | 12.5 |
| 26 | 8.3 | 8.8 | 9.3 | 9.8 | 10.3 | 10.8 | 11.3 | 11.8 | 12.3 | 12.8 |
| 27 | 8.6 | 9.1 | 9.6 | 10.1 | **10.6** | 11.1 | 11.6 | 12.1 | 12.6 | 13.1 |
| 28 | 8.9 | 9.4 | 9.9 | 10.4 | 10.9 | 11.4 | 11.9 | 12.4 | 12.9 | 13.4 |
| 29 | 9.2 | 9.7 | 10.2 | 10.7 | 11.2 | 11.7 | 12.2 | 12.7 | 13.2 | 13.7 |
| 30 | 9.5 | 10 | 10.5 | 11 | 11.5 | 12 | 12.5 | 13 | 13.5 | 14 |
| 31 | 9.8 | 10.3 | 10.8 | 11.3 | 11.8 | 12.3 | 12.8 | 13.3 | 13.8 | 14.3 |
| 32 | 10.1 | **10.6** | 11.1 | 11.6 | 12.1 | 12.6 | 13.1 | 13.6 | 14.1 | 14.6 |
| 33 | 10.4 | 10.9 | 11.4 | 11.9 | 12.4 | 12.9 | 13.4 | 13.9 | 14.4 | 14.9 |
| 34 | 10.7 | 11.2 | 11.7 | 12.2 | 12.7 | 13.2 | 13.7 | 14.2 | 14.7 | 15.2 |
| 35 | 11 | 11.5 | 12 | 12.5 | 13 | 13.5 | 14 | 14.5 | 15 | 15.5 |
| 36 | 11.3 | 11.8 | 12.3 | 12.8 | 13.3 | 13.8 | 14.3 | 14.8 | 15.3 | 15.8 |
| 37 | 11.6 | 12.1 | 12.6 | 13.1 | 13.6 | 14.1 | 14.6 | 15.1 | 15.6 | 16.1 |
| 38 | 11.9 | 12.4 | 12.9 | 13.4 | 13.9 | 14.4 | 14.9 | 15.4 | 15.9 | 16.4 |
| 39 | 12.2 | 12.7 | 13.2 | 13.7 | 14.2 | 14.7 | 15.2 | 15.7 | 16.2 | 16.7 |
| 40 | 12.5 | 13 | 13.5 | 14 | 14.5 | 15 | 15.5 | 16 | 16.5 | 17 |
| 41 | 12.8 | 13.3 | 13.8 | 14.3 | 14.8 | 15.3 | 15.8 | 16.3 | 16.8 | 17.3 |
| 42 | 13.1 | 13.6 | 14.1 | 14.6 | 15.1 | 15.6 | 16.1 | 16.6 | 17.1 | 17.6 |
| 43 | 13.4 | 13.9 | 14.4 | 14.9 | 15.4 | 15.9 | 16.4 | 16.9 | 17.4 | 17.9 |
| 44 | 13.7 | 14.2 | 14.7 | 15.2 | 15.7 | 16.2 | 16.7 | 17.2 | 17.7 | 18.2 |
| 45 | 14 | 14.5 | 15 | 15.5 | 16 | 16.5 | 17 | 17.5 | 18 | 18.5 |
| 46 | 14.3 | 14.8 | 15.3 | 15.8 | 16.3 | 16.8 | 17.3 | 17.8 | 18.3 | 18.8 |
| 47 | 14.6 | 15.1 | 15.6 | 16.1 | 16.6 | 17.1 | 17.6 | 18.1 | 18.6 | 19.1 |
| 48 | 14.9 | 15.4 | 15.9 | 16.4 | 16.9 | 17.4 | 17.9 | 18.4 | 18.9 | 19.4 |
| 49 | 15.2 | 15.7 | 16.2 | 16.7 | 17.2 | 17.7 | 18.2 | 18.7 | 19.2 | 19.7 |
| 50 | 15.5 | 16 | 16.5 | 17 | 17.5 | 18 | 18.5 | 19 | 19.5 | 20 |
| 51 | 15.8 | 16.3 | 16.8 | 17.3 | 17.8 | 18.3 | 18.8 | 19.3 | 19.8 | 20.3 |
| 52 | 16.1 | 16.6 | 17.1 | 17.6 | 18.1 | 18.6 | 19.1 | 19.6 | 20.1 | 20.6 |
| 53 | 16.4 | 16.9 | 17.4 | 17.9 | 18.4 | 18.9 | 19.4 | 19.9 | 20.4 | 20.9 |
| 54 | 16.7 | 17.2 | 17.7 | 18.2 | 18.7 | 19.2 | 19.7 | 20.2 | 20.7 | 21.2 |

| 55 | 17 | 17.5 | 18 | 18.5 | 19 | 19.5 | 20 | 20.5 | 21 | 21.5 |
|----|------|------|------|------|------|------|------|------|------|------|
| 56 | 17.3 | 17.8 | 18.3 | 18.8 | 19.3 | 19.8 | 20.3 | 20.8 | 21.3 | 21.8 |
| 57 | 17.6 | 18.1 | 18.6 | 19.1 | 19.6 | 20.1 | 20.6 | 21.1 | 21.6 | 22.1 |
| 58 | 17.9 | 18.4 | 18.9 | 19.4 | 19.9 | 20.4 | 20.9 | 21.4 | 21.9 | 22.4 |
| 59 | 18.2 | 18.7 | 19.2 | 19.7 | 20.2 | 20.7 | 21.2 | 21.7 | 22.2 | 22.7 |
| 60 | 18.5 | 19 | 19.5 | 20 | 20.5 | 21 | 21.5 | 22 | 22.5 | 23 |
| 61 | 18.8 | 19.3 | 19.8 | 20.3 | 20.8 | 21.3 | 21.8 | 22.3 | 22.8 | 23.3 |
| 62 | 19.1 | 19.6 | 20.1 | 20.6 | 21.1 | 21.6 | 22.1 | 22.6 | 23.1 | 23.6 |
| 63 | 19.4 | 19.9 | 20.4 | 20.9 | 21.4 | 21.9 | 22.4 | 22.9 | 23.4 | 23.9 |

Taking an example in which the first signal quality measured by the first node is 10.6dB, it may be seen from Table 3 that there is multiple second signal quality that are identical to the first signal quality (the difference is 0), the corresponding access resource is as follows (slot, preamble index) = [(1, 32), (4, 27), (7, 22)]. The first node may arbitrarily select one group of access resources from the three groups of access resources to send the access request. The second node may perform searching on Table 2 according to the access resource, to obtain the corresponding second signal quality of 10.6 dB, and determine the resource scheduling strategy according to the value of 10.6dB, and perform resource scheduling on the first node.

The embodiments of the present disclosure provide an access method and in which the first node and the second node store a same mapping relationship. The first node, when initiating a request for access, may determine an access resource to be used for access from the mapping relationship according to a current signal quality. Then, the second node may determine signal quality of the first node from the mapping relationship according to the target access resource corresponding to a received request, and then perform resource scheduling on the first node according to the signal quality, which ensures that the scheduling method matches the signal quality, avoids a retry process of random access, and reduces the overhead of transmission resources.

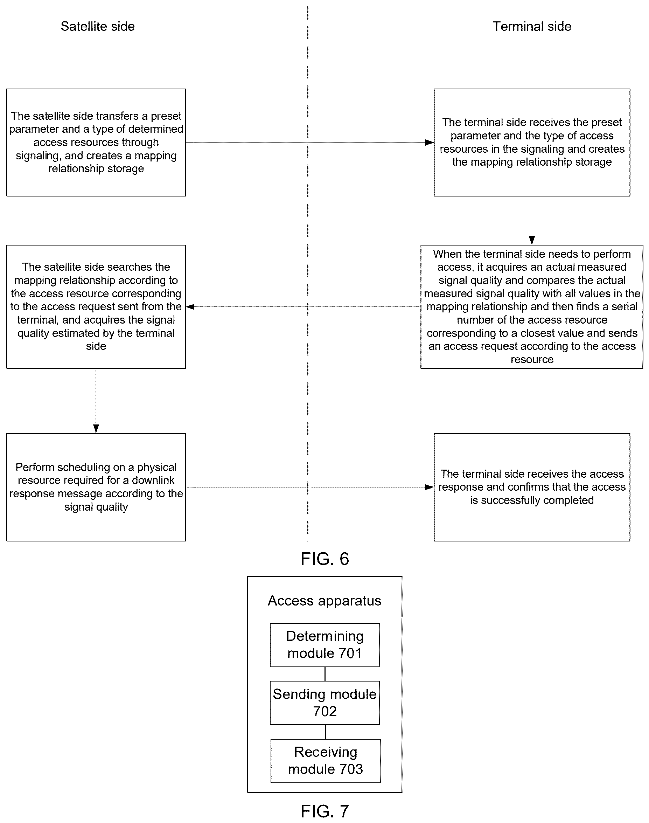

FIG. 6 is a schematic diagram of an interaction of an access method provided by the embodiments of the present disclosure. As shown in FIG. 6, the satellite side transfers preset parameters and types of determined access resources through signaling, and creates a mapping relationship storage. The terminal side receives the preset parameters and types of access resources in the signaling and creates the mapping relationship storage. When the terminal side needs to perform access, it acquires the actual measured signal quality and compares the actual measured signal quality with all values in the mapping relationship and then finds the numbering of the access resource corresponding to the closest value and sends the access request according to the access resource. The satellite side searches the mapping relationship according to the access resource corresponding to the access request sent from the terminal, acquires the signal quality estimated by the terminal side, and then performs scheduling on the physical resources required for the downlink response message according to the signal quality, and sends the access response. The terminal side receives the access response and confirms that the access is successfully completed.

It can be understood that in order to achieve the functions mentioned above, an access apparatus (may be the above-mentioned first node or second node) contains corresponding hardware structures and/or software modules for performing respective functions. Those skilled in the art should easily realize that the present disclosure can be implemented in the form of hardware or a combination of hardware and computer software, in combination with the algorithm steps of various examples described in the embodiments of the present disclosure. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the present disclosure.

In the embodiments of the present disclosure, the access apparatus may be divided into functional modules according to the above-mentioned method embodiments, and for example, each functional module may be divided corresponding to each function, or two or more functions may also be integrated into one functional module. The above-mentioned integrated module may be implemented in the form of hardware or may also be implemented in the form of software. It should be noted that the division of modules in the embodiments of the present disclosure is illustrative, and is merely a kind of logical functional division, and there may be other division methods in actual implementations. The example in which each functional module is divided corresponding to each function, is taken for explanation below.

FIG. 7 is a structural schematic diagram of an access apparatus, provided in the embodiments of the present disclosure, and the access apparatus may perform the access method provided in the above method embodiments. As shown in FIG. 7, the access apparatus includes a determining module 701 and a sending module 702.

The determining module 701 is configured to, determine a target access resource from a mapping relationship according to first signal quality, where the first signal quality is obtained by the first node measuring a signal of a second node, and the mapping relationship includes a corresponding relationship between multiple signal quality and multiple access resources.

The sending module 702 is configured to, send an access request to the second node through the target access resource, where the access request is used to request to access the second node.

In some embodiments, the determining module 701 is configured to determine second signal quality from the mapping relationship according the first signal quality, where the second signal quality has a smallest difference with the first signal quality compared to those with other signal quality in the mapping relationship; and determine an access resource corresponding to the second signal quality in the mapping relationship, as the target access resource.

In some embodiments, the signal quality in the mapping relationship is determined according to a numbering of the access resource and multiple preset parameters.

In some embodiments, the access resource is any one of: a slot; a preamble index; or a slot and a preamble index.

In some embodiments, in response to that the access resource is a slot or a preamble index, the multiple preset parameters include: a and b, where a and b are real numbers;

the signal quality in the mapping relationship is determined according to the numbering of the access resource and the multiple preset parameters, and satisfies an expression as follows:

$$SQ = Rn \cdot a + b;$$

where SQ is signal quality, Rn is a numbering of the access resource, a is used to represent a slope of a relationship between the signal quality and the access resource, and b is used to represent an intercept of the relationship between the signal quality and the access resource.

In some embodiments, in response to that the access resource is a slot and a preamble index, the multiple preset parameters include: a, b, c and d, where a, b, c and d are real numbers;

the signal quality in the mapping relationship is determined according to the numbering of the access resource and the multiple preset parameters, and satisfies an expression as follows:

$$SQ = Rn1 \cdot a + b + Rn2 \cdot c + d;$$

where SQ is signal quality, Rn1 a numbering of a slot, Rn2 is a numbering of a preamble index, a is used to represent a slope of a relationship between the signal quality and the slot, b is used to represent an intercept of the relationship between the signal quality and the slot, c is used to represent a slope of a relationship between the signal quality and the preamble index, and d is used to represent an intercept of the relationship between the signal quality and the preamble index.

In an embodiment, the above access apparatus further includes: a receiving module 703. The receiving module 703 is configured to receive a configuration instruction issued from the second node, where the configuration instruction is used to indicate the first node to construct the mapping relationship; and the configuration instruction includes the multiple preset parameters. The determining module 701 is further configured to construct the mapping relationship in response to the configuration instruction.

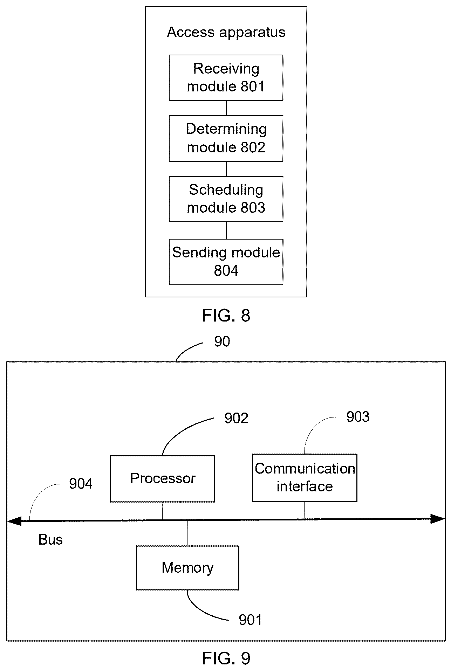

FIG. 8 is a structural schematic diagram of another access apparatus, provided in the embodiments of the present disclosure, and the access apparatus may perform the access method provided in the above method embodiments. As shown in FIG. 8, the access apparatus includes: a receiving module 801, a determining module 802 and a scheduling module 803.

The receiving module 801 is configured to, receive an access request of a first node and determine a corresponding target access resource.

The determining module 802 is configured to, determine second signal quality from a mapping relationship according to the target access resource, where the mapping relationship includes a corresponding relationship between multiple signal quality and multiple access resources.

The scheduling module 803 is configured to, perform resource scheduling on the first node according to the second signal quality.

In some embodiments, the signal quality in the mapping relationship is determined according to a numbering of the access resource and the multiple preset parameters.

In some embodiments, the access resource is any one of: a slot; a preamble index; or a slot and a preamble index.

In some embodiments, in response to that the access resource is a slot or a preamble index, the multiple preset parameters include: a and b, where a and b are real numbers;

the signal quality in the mapping relationship is determined according to the numbering of the access resource and the multiple preset parameters, and satisfies an expression as follows:

$$SQ = Rn \cdot a + b;$$

where SQ is signal quality, Rn is a numbering of the access resource, a is used to represent a slope of a relationship between the signal quality and the access resource, and b is used to represent an intercept of the relationship between the signal quality and the access resource.

In some embodiments, in response to that the access resource is a slot and a preamble index, the multiple preset parameters include: a, b, c and d, where a, b, c and d are real numbers;

the signal quality in the mapping relationship is determined according to the numbering of the access resource and the multiple preset parameters, and satisfies an expression as follows:

$$SQ = Rn1 \cdot a + b + Rn2 \cdot c + d;$$

where SQ is signal quality, Rn1 a numbering of a slot, Rn2 is a numbering of a preamble index, a is used to represent a slope of a relationship between the signal quality and the slot, b is used to represent an intercept of the relationship between the signal quality and the slot, c is used to represent a slope of a relationship between the signal quality and the preamble index, and d is used to represent an intercept of the relationship between the signal quality and the preamble index.

In some embodiments, the above apparatus further includes a sending module 804. The sending module 804 is configured to, deliver a configuration instruction to the first node, where the configuration instruction is used to indicate the first node to construct the mapping relationship; and the configuration instruction include the multiple preset parameters.

The embodiments of the present disclosure provide a communication system, and the communication system includes a first node and a second node. The first node is used to perform the method described in S400 to S402 above, and the second node is used to perform the method described in S501 to S504 above.

In a case where the functions of the above integrated modules are implemented in the form of hardware, the embodiments of the present disclosure provide another structure of the electronic device or the communication apparatus involved in the above embodiments. As shown in FIG. 9, the electronic device 90 or the communication apparatus includes a memory 901, a processor 902, a communication interface 903 and a bus 904.

The memory 901 may be, but not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

The processor 902 may be modules and circuits that implement or perform various exemplary logical blocks described in conjunction with the embodiments of the present disclosure. The processor 902 may be a central processing unit, a general-purpose processor, a digital signal processor, an application specific integrated circuit, a field programmable gate array or other programmable logic devices, a transistor logic device, a hardware component or any combination thereof. The processor 902 may implement or perform various exemplary logical blocks, modules and circuits described in conjunction with the embodiments of the present disclosure. The processor 902 may also be a combination that implements computing functions, for example, including a combination of one or more microprocessors, a combination of a digital signal processor (DSP) and a microprocessor, or the like.

The communication interface 903 is configured to connect with other devices via a communication network. The communication network may be an Ethernet, a radio access network, a wireless local area network (WLAN), or the like.

In some embodiments, the memory 901 may be separated from the processor 902, and the memory 901 may be connected to the processor 902 via the bus 904 and is configured to store instructions or program codes. The processor 902, when calling and executing the instructions or program codes stored in the memory 901, is capable of implementing the access method provided in the embodiments of the present disclosure.

In some embodiments, the memory 901 may also be integrated with the processor 902.

The bus 904 may be an extended industry standard architecture (EISA) bus or the like. Buses 904 may be divided into address buses, data buses, control buses, and the like. For the convenience of representation, only one thick line is used in FIG. 9 for representation, but it does not mean that there is only one bus or one type of bus.

In some embodiments, the memory 901 stores executable instructions, and the executable instructions, when executed by the processor 902, cause the electronic device or communication apparatus to perform the access method as described in any embodiment of the above-mentioned embodiments.

Some embodiments of the present disclosure provide a computer readable storage medium (e.g., a non-transitory computer readable storage medium), and the computer readable storage medium has stored computer program instructions therein, and the computer program instructions, when executed on a computer, cause the computer to perform the access method as described in any embodiment of the above-mentioned embodiments.

Exemplarily, the computer-readable storage medium may include, but is not limited to a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer readable storage media described in the present disclosure may represent one or more devices for storing information and/or other machine readable storage media for storing information. The term "machine readable storage medium" may include, but be not limited to, a radio channel and various other media capable of storing, containing, and/or carrying instructions and/or data.

Some embodiments of the present disclosure provide a computer program product including instructions, and the computer program product, when running on a computer, causes the computer to perform the access method as described in any embodiment of the above-mentioned embodiments.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

**Claims**

1. An access method, applied to a first node, **characterized in that** the method comprises:

   determining a target access resource from a mapping relationship according to first signal quality, wherein the first signal quality is obtained by the first node measuring a signal of a second node, and the mapping relationship comprises a corresponding relationship between multiple signal quality and multiple access resources; and
   sending an access request to the second node based on the target access resource, wherein the access request is used to request to access the second node.

2. The method according to claim 1, wherein determining the target access resource from the mapping relationship according to the first signal quality comprises:

   determining second signal quality from the mapping relationship according the first signal quality, wherein the second signal quality has a smallest difference with the first signal quality compared to those with other signal quality in the mapping relationship; and
   determining an access resource corresponding to the second signal quality in the mapping relationship, as the target access resource.

3. The method according to claim 1 or 2, wherein signal quality in the mapping relationship is determined according to a numbering of an access resource and multiple preset parameters.

4. The method according to claim 3, wherein the access resource is any one of: a slot; a preamble index; or a slot and a preamble index.

5. The method according to claim 4, wherein in response to that the access resource is a slot or a preamble index, the multiple preset parameters comprise: a and b, wherein a and b are real numbers;

the signal quality in the mapping relationship is determined according to the numbering of the access resource and the multiple preset parameters, and satisfies an expression as follows:

$$SQ = Rn \cdot a+b;$$

wherein SQ is signal quality, Rn is a numbering of the access resource, a is used to represent a slope of a relationship between the signal quality and the access resource, and b is used to represent an intercept of the relationship between the signal quality and the access resource.

6. The method according to claim 4, wherein in response to that the access resource is a slot and a preamble index, the multiple preset parameters comprise: a, b, c and d, wherein a, b, c and d are real numbers;

the signal quality in the mapping relationship is determined according to the numbering of the access resource and the multiple preset parameters, and satisfies an expression as follows:

$$SQ = Rn1 \cdot a+b+Rn2 \cdot c+d;$$

wherein SQ is signal quality, Rn1 a numbering of a slot, Rn2 is a numbering of a preamble index, a is used to represent a slope of a relationship between the signal quality and the slot, b is used to represent an intercept of the relationship between the signal quality and the slot, c is used to represent a slope of a relationship between the signal quality and the preamble index, and d is used to represent an intercept of the relationship between the signal quality and the preamble index.

7. The method according to claim 3, further comprising:

receiving a configuration instruction issued from the second node, wherein the configuration instruction is used to indicate the first node to construct the mapping relationship; and the configuration instruction comprises the multiple preset parameters; and
in response to the configuration instruction, constructing the mapping relationship.

8. An access method, applied to a second node, **characterized in that** the method comprises:

receiving an access request of a first node and determining a corresponding target access resource;
determining second signal quality from a mapping relationship according to the target access resource, wherein the mapping relationship comprises a corresponding relationship between multiple signal quality and multiple access resources; and
performing resource scheduling on the first node according to the second signal quality.

9. The method according to claim 8, wherein signal quality in the mapping relationship is determined according to a numbering of an access resource and multiple preset parameters.

10. The method according to claim 9, wherein the access resource is any one of: a slot; a preamble index; or a slot and a preamble index.

11. The method according to claim 10, wherein in response to that the access resource is a slot or a preamble index, the multiple preset parameters comprise: a and b, wherein a and b are real numbers;

the signal quality in the mapping relationship is determined according to the numbering of the access resource and the multiple preset parameters, and satisfies an expression as follows:

$$SQ = Rn \cdot a+b;$$

wherein SQ is signal quality, Rn is a numbering of the access resource, a is used to represent a slope of a relationship between the signal quality and the access resource, and b is used to represent an intercept of the relationship between the signal quality and the access resource.

**12.** The method according to claim 10, wherein in response to that the access resource is a slot and a preamble index, the multiple preset parameters comprise: a, b, c and d, wherein a, b, c and d are real numbers;

the signal quality in the mapping relationship is determined according to the numbering of the access resource and the multiple preset parameters, and satisfies an expression as follows:

$$SQ = Rn1 \cdot a + b + Rn2 \cdot c + d;$$

wherein SQ is signal quality, Rn1 a numbering of a slot, Rn2 is a numbering of a preamble index, a is used to represent a slope of a relationship between the signal quality and the slot, b is used to represent an intercept of the relationship between the signal quality and the slot, c is used to represent a slope of a relationship between the signal quality and the preamble index, and d is used to represent an intercept of the relationship between the signal quality and the preamble index.

**13.** The method according to claim 8, further comprising:
delivering a configuration instruction to the first node, wherein the configuration instruction is used to indicate the first node to construct the mapping relationship; and the configuration instruction comprises the multiple preset parameters.

**14.** An access apparatus, applied to a first node, **characterized in that** the apparatus comprises: a determining module and a sending module;

the determining module is configured to, determine a target access resource from a mapping relationship according to first signal quality, wherein the first signal quality is obtained by the first node measuring a signal of a second node, and the mapping relationship comprises a corresponding relationship between multiple signal quality and multiple access resources; and
the sending module is configured to, send an access request to the second node based on the target access resource, wherein the access request is used to request to access the second node.

**15.** An access apparatus, applied to a second node, **characterized in that** the apparatus comprises: a receiving module, a determining module, and a scheduling module;

the receiving module is configured to, receive an access request of a first node and determine a corresponding target access resource;
the determining module is configured to, determine second signal quality from a mapping relationship according to the target access resource, wherein the mapping relationship comprises a corresponding relationship between multiple signal quality and multiple access resources; and
the scheduling module is configured to, perform resource scheduling on the first node according to the second signal quality.

**16.** An electronic device, **characterized by** comprising: a processor and a memory for storing instructions executable for the processor;
wherein the processor is configured to execute the instructions, so that the electronic device performs the access method according to any one of claims 1 to 13.

**17.** A computer readable storage medium, **characterized in that** the computer readable storage medium has stored computer instructions thereon, and the computer instructions, when executed on a processor, cause the processor to perform the access method according to any one of claims 1 to 13.

FIG. 1

FIG. 2

Satellite      User equipment

FIG. 3

| A first node, according to a first signal quality, determines a target access resource from a mapping relationship | S401 |

| The first node sends an access request to a second node by means of the target access resource | S402 |

FIG. 4

| A second node receives an access request of a first node and determines a corresponding target access resource | S501 |

| The second node determines second signal quality from a mapping relationship according to the target access resource | S502 |

| The second node performs resource scheduling on the first node according to the second signal quality | S503 |

FIG. 5

**Satellite side**

**Terminal side**

The satellite side transfers a preset parameter and a type of determined access resources through signaling, and creates a mapping relationship storage

The terminal side receives the preset parameter and the type of access resources in the signaling and creates the mapping relationship storage

When the terminal side needs to perform access, it acquires an actual measured signal quality and compares the actual measured signal quality with all values in the mapping relationship and then finds a serial number of the access resource corresponding to a closest value and sends an access request according to the access resource

The satellite side searches the mapping relationship according to the access resource corresponding to the access request sent from the terminal, and acquires the signal quality estimated by the terminal side

Perform scheduling on a physical resource required for a downlink response message according to the signal quality

The terminal side receives the access response and confirms that the access is successfully completed

**FIG. 6**

Access apparatus

Determining module 701

Sending module 702

Receiving module 703

**FIG. 7**

Access apparatus

Receiving
module 801

Determining
module 802

Scheduling
module 803

Sending module
804

FIG. 8

90

902

903

904

Processor

Communication
interface

Bus

Memory

901

FIG. 9

## INTERNATIONAL SEARCH REPORT

| International application No. |
| --- |
| **PCT/CN2024/083364** |

| A. | CLASSIFICATION OF SUBJECT MATTER |
| --- | --- |

H04W72/542(2023.01)i

According to International Patent Classification (IPC) or to both national classification and IPC

| B. | FIELDS SEARCHED |
| --- | --- |

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, CNABS, CNKI, ENTXT, VEN, 3GPP: 卫星, 非地面, 随机接入, 接入, 通信, 通讯, 测量, 质量, 强度, 信噪比, 功率, 映射, 对应, 关联, 匹配, 确定, 选择, 目标, 时机, 时隙, 波束, 载波, 资源, 前导, 调度, 编码, 资源块, 请求, 序号, 编号, 标识, 标志, satellite, non-terrestrial, RACH, access+, communicat+, measur+, RSRQ, RSSI, SNR, RSRP, mapping, correspond+, associat+, match+, determin+, select+, slot, timing, beam, carrier, resource, preamble, schedul+, modulation, MCS, RB, request, number, ID

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 20200055651 A (ELECTRONICS & TELECOMMUNICATIONS RESEARCH INSTITUTE) 21 May 2020 (2020-05-21) claim 1, description, paragraphs [0026]-[0150], and figures 1-6 | 1-4, 7, 14, 16-17 |
| Y | KR 20200055651 A (ELECTRONICS & TELECOMMUNICATIONS RESEARCH INSTITUTE) 21 May 2020 (2020-05-21) claim 1, description, paragraphs [0026]-[0150], and figures 1-6 | 8-10, 13, 15 |
| A | KR 20200055651 A (ELECTRONICS & TELECOMMUNICATIONS RESEARCH INSTITUTE) 21 May 2020 (2020-05-21) entire document | 5-6, 11-12 |
| Y | CN 107979874 A (ZTE CORP.) 01 May 2018 (2018-05-01) description, paragraphs [0037]-[0107], and figures 2-3 | 8-10, 13, 15 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 May 2024** | **24 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/083364**

| C. DOCUMENTS CONSIDERED TO BE RELEVANT | | |
|---|---|---|
| Category* | Citation of document, with indication, where appropriate, of the relevant passages | Relevant to claim No. |
| A | CN 115484689 A (CHINA STAR NETWORK APPLICATION CO., LTD.) 16 December 2022 (2022-12-16)<br>entire document | 1-17 |
| A | CN 114745785 A (SPREADTRUM SEMICONDUCTOR (NANJING) CO., LTD.) 12 July 2022 (2022-07-12)<br>entire document | 1-17 |

Form PCT/ISA/210 (second sheet) (July 2022)

**INTERNATIONAL SEARCH REPORT**
Information on patent family members

International application No.

**PCT/CN2024/083364**

| Patent document cited in search report | | | Publication date (day/month/year) | Patent family member(s) | | | Publication date (day/month/year) |
|---|---|---|---|---|---|---|---|
| KR | 20200055651 | A | 21 May 2020 | None | | | |
| CN | 107979874 | A | 01 May 2018 | WO | 2018072686 | A1 | 26 April 2018 |
| CN | 115484689 | A | 16 December 2022 | None | | | |
| CN | 114745785 | A | 12 July 2022 | None | | | |

Form PCT/ISA/210 (patent family annex) (July 2022)

**REFERENCES CITED IN THE DESCRIPTION**

**Patent documents cited in the description**

- CN 202310688401X